# FASCICULE DE BREVET EUROPEEN

(11) **EP 0 866 783 B1**
(45) Date de publication et mention de la délivrance du brevet: **22.09.1999**
(21) Numéro de dépôt: 96941714.6
(22) Date de dépôt: 06.12.1996
(51) Int. Cl.: C04B 35/80, B32B 18/00

(54) **MATERIAUX COMPOSITES THERMOSTRUCTURAUX AVEC RENFORTS EN FIBRES CARBONE OU REVETUES DE CARBONE, AYANT UNE RESISTANCE ACCRUE A L'OXYDATION**
MIT KOHLENSTOFF- ODER KOHLENSTOFFBESCHICHTETEN FASERN VERSTÄRKTE HOCHTEMPERATURBESTÄNDIGE VERBUNDWERKSTOFFE, DIE EINE VERBESSERTE STABILITÄT GEGEN OXIDATION AUFWEISEN
HIGH-TEMPERATURE COMPOSITE MATERIALS WITH CARBON OR CARBON-COATED FIBRE REINFORCEMENTS AND ENHANCED OXIDATION RESISTANCE

(30) Priorité: 14.12.1995 FR 9514843
(43) Date de publication de la demande: 30.09.1998
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: LAMOUROUX, Frank, F-38090 Villefontaine (FR); PAILLER, René, F-33610 Cestas (FR); NASLAIN, Roger, F-33600 Pessac (FR); CATALDI, Michel, F-33140 Villenave-d'Ornon (FR)
(74) Mandataire: Joly, Jean-Jacques
(86) Numéro de dépôt international: FR9601951
(87) Numéro de publication internationale: WO9721645

(56) Documents cités:
- EP-A- 0 385 869
- EP-A- 0 483 009
- EP-A- 0 672 637
- JOURNAL OF THE AMERICAN CERAMIC SOCIETY, APRIL 1996, AMERICAN CERAMIC SOC, USA, XP000601285 DROILLARD C ET AL: "Fracture toughness of 2-D woven SiC/SiC CVI-composites with multilayered interphases"
- TENTH EUROPEAN CONFERENCE ON CHEMICAL VAPOUR DEPOSITION, VENICE, ITALY, 10-15 SEPT. 1995, vol. 5, no. C5, pt.2, ISSN 1155-4339, JOURNAL DE PHYSIQUE IV (COLLOQUE), JUNE 1995, FRANCE, pages 735-751, XP000601052 VANDENBULKE L ET AL: "Silicon and boron containing components by CVD and CVI for high temperature ceramic composites"

## Description

La présente invention vise l'amélioration de la tenue à l'oxydation de matériaux composites thermostructuraux ayant un renfort en fibres carbone ou revêtues de carbone.

Les matériaux composites thermostructuraux sont des matériaux comprenant un renfort fibreux, ou préforme fibreuse, dont les fibres sont en matériau réfractaire, tel que carbone ou céramique, et une matrice comblant au moins partiellement la porosité initiale du renfort fibreux. Ces matériaux sont remarquables par leurs propriétés mécaniques, qui leur permettent d'être utilisés pour des éléments de structure, et par leur capacité à conserver ces propriétés à des températures élevées, en particulier lorsque la matrice est en céramique.

Généralement, la matrice céramique de tels matériaux composites est sujette à fissuration. La présence de fissures est notée déjà au stade de l'élaboration du matériau, en particulier lorsque la matrice est sujette à des contraintes thermiques du fait de son obtention par infiltration chimique en phase vapeur ou par imprégnation au moyen d'un précurseur liquide et transformation du précurseur en céramique par traitement thermique. Ces fissures initiales se multiplient ensuite sous l'effet des sollicitations thermomécaniques rencontrées au cours de l'utilisation du matériau. Toutefois, grâce à la présence du renfort fibreux, le caractère endommageable du matériau par fissuration de la matrice n'affecte pas immédiatement son intégrité, conférant ainsi des caractéristiques thermo-structurales au matériau.

Les matériaux composites thermostructuraux trouvent des applications dans différents domaines où est exploitée leur capacité de résister à de fortes sollicitations mécaniques sous des températures élevées, notamment dans les domaines aéronautique, spatial et freinage. Dans leur utilisation, ces matériaux sont le plus souvent exposés à un environnement extérieur oxydant, notamment l'air ambiant.

Lorsque les fibres de renfort sont en un matériau oxydable, tel que le carbone, la conjugaison d'un réseau de fissures au sein de la matrice, d'un environnement oxydant et d'une température élevée conduit inexorablement à la destruction des fibres et, par voie de conséquence, à l'effondrement des propriétés mécaniques du matériau.

Un problème similaire est rencontré lorsque le carbone est présent dans le matériau non pas au niveau des fibres du renfort, mais au niveau d'une interphase entre des fibres céramiques et une matrice céramique. La réalisation d'une telle interphase en carbone pyrolytique et son utilité pour améliorer le comportement mécanique du matériau sont bien connues dans l'état de la technique. On pourra notamment se référer au document EP-A-0 172 082 de la demanderesse.

Afin d'améliorer la résistance à l'oxydation de matériau composite contenant du carbone, il a été proposé de munir le matériau d'un revêtement de surface formant une barrière vis-à-vis de l'oxygène du milieu ambiant en étant capable de colmater des fissures apparaissant dans la matrice du matériau composite ou dans le revêtement lui-même. A cet effet, le revêtement protecteur comprend au moins une couche autocicatrisante, généralement une couche vitreuse qui, par le passage du verre à l'état pâteux, permet le colmatage de fissures à des températures excédant le point de fusion du verre.

Cette solution présente plusieurs inconvénients. D'abord, l'effet cicatrisant ne peut être obtenu de façon satisfaisante que dans une gamme limitée de températures. Aux températures plus basses, la viscosité du verre est trop forte, tandis qu'aux températures plus élevées la viscosité devient trop faible et la composition autocicatrisante risque d'être endommagée par frottement, cisaillement, voire même par soufflage, c'est-à-dire par exposition à un fort courant gazeux.

Une autre solution connue consiste à réaliser une matrice séquencée, en formant la matrice par des couches de matériaux ayant alternativement une relativement forte rigidité, notamment un matériau céramique, et une relativement faible rigidité en cisaillement, notamment du carbone pyrolytique de type laminaire rugueux ou du nitrure de bore. Une telle solution est décrite notamment dans le document EP-A-0 385 869 de la demanderesse. Le séquençage de la matrice a pour effet de compliquer le mode de propagation des fissures et, par là même, de ralentir la diffusion de l'oxygène à l'intérieur du matériau.

Avec cette autre solution, l'oxydation d'un renfort en fibres carbone ou en fibres revêtues de carbone n'est que ralentie. En effet, on ne peut nécessairement éviter une fissuration initiale au sein des couches rigides, qui se propage tôt ou tard vers les fibres en fonction des sollicitations thermomécaniques auxquelles le matériau est exposé.

La présente invention a pour but de remédier aux inconvénients des procédés de l'art antérieur.

L'invention a plus particulièrement pour objet d'améliorer la résistance à l'oxydation d'un matériau composite thermostructural à matrice céramique et renfort en fibres carbone ou revêtues de carbone en réalisant un séquençage de la matrice tel que la fissuration de la matrice puisse être retardée au maximum.

Ce but est atteint grâce à un procédé du type selon lequel une matrice est formée par infiltration chimique en phase vapeur au sein d'un renfort fibreux au moins partiellement de façon séquencée en alternant la formation d'une couche en une matière relativement souple capable de dévier d'éventuelles fissures qui l'atteignent et d'une couche en une matière céramique relativement rigide, procédé dans lequel :
- chaque séquence élémentaire de matrice comprenant une couche relativement souple et une couche céramique relativement rigide est formée avec une épaisseur qui varie de façon croissante à partir des fibres du renfort, au fur et à mesure de l'élaboration de la matrice, l'épaisseur totale d'au moins la séquence élémentaire de matrice déposée en premier sur les fibres étant choisie suffisamment faible pour gainer les fibres de façon essentiellement individuelle, et
- les couches relativement souples sont réalisées en une ou plusieurs matières anisotropes présentant une capacité suffisante de déformation élastique en cisaillement et transversale, et l'épaisseur des couches relativement souples élémentaires est choisie suffisamment grande, tout en conservant un caractère principalement céramique à la matrice, pour pouvoir absorber les dilatations différentielles des constituants du matériau composite au stade de l'élaboration de celui-ci sans induire l'existence d'un réseau de fissuration initiale.

Le procédé selon l'invention est remarquable en ce que, par une sélection appropriée des caractéristiques du séquençage de la matrice, il est possible de réaliser un matériau composite thermostructural ayant une matrice principalement céramique qui, au stade de l'élaboration du matériau composite, ne présente pas de fissuration initiale.

Ce résultat est obtenu par la combinaison de :
- la réalisation d'au moins la première séquence élémentaire avec une épaisseur suffisamment faible pour pouvoir gainer les fibres de façon essentiellement individuelle, par exemple avec une épaisseur de préférence comprise entre 0,2 et 1 micron. Le gainage des fibres par des couches concentriques fait que les dilatations différentielles sont absorbées au voisinage des fibres par la capacité de déformation élastique en direction transversale, c'est-à-dire radiale, de la ou des couches relativement souples disposées concentriquement autour de chaque fibre, sans induire de fissuration des couches céramiques relativement rigides adjacentes. De plus, le gainage individuel des fibres a pour résultat la formation de fibres gainées ayant un diamètre apparent supérieur à celui des fibres initiales du renfort fibreux mais qui, au sein du matériau composite, se comportent du point de vue mécanique, de la même façon que des fibres de renfort non gainées. Cette augmentation du diamètre des fibres permet alors d'utiliser au départ un renfort fibreux constitué de fibres de plus petit diamètre et/ou ayant un taux volumique de fibres inférieur ;
- l'utilisation pour les couches relativement souples d'une ou plusieurs matières choisies parmi celles ayant un caractère anisotrope et une capacité de déformation élastique en cisaillement et en direction transversale par rapport aux couches. Ces matières sont par exemple choisies parmi le carbone pyrolytique, notamment le carbone pyrolytique de type laminaire rugueux, le nitrure de bore, le carbone dopé au bore, et autres matières ayant des propriétés équivalentes susceptibles d'être formées par infiltration chimique en phase vapeur. Avantageusement, la ou les matières des couches relativement souples peut être choisie parmi des matières aptes à constituer un composé autocicatrisant, tel qu'un verre, sous l'effet d'une oxydation. De la sorte, lorsque la matrice du matériau composite commence à se fissurer sous l'effet d'intenses sollicitations thermomécaniques, la capacité des couches relativement souples de dévier les fissures s'accompagne de la faculté de cicatrisation des fissures pour s'opposer encore plus efficacement à la pénétration de l'oxygène du milieu ambiant en direction des fibres ;
- le choix d'une épaisseur suffisante pour les couches relativement souples, tout en conservant un caractère principalement céramique à la matrice, l'épaisseur totale des couches relativement souples représentant par exemple entre environ 4 % et environ 20 % de l'épaisseur totale des couches formant la matrice séquencée. Dans les séquences élémentaires, le pourcentage S représenté par l'épaisseur de la couche relativement souple par rapport à l'épaisseur totale de la séquence peut décroître entre une valeur maximale Smax dans la séquence élémentaire formée en premier sur les fibres et une valeur minimale Smin dans la séquence élémentaire de matrice formée en dernier. La valeur Smax est par exemple comprise entre environ 10 % et environ 35 % tandis que la valeur Smin est par exemple comprise entre environ 3 % et environ 20 %.

Outre l'absence de fissuration initiale de la matrice du matériau composite, le séquençage particulier adopté, notamment dans la distribution et les épaisseurs relatives des couches relativement souples, peut faire en sorte qu'au cours de l'exposition du matériau composite à des sollicitations thermomécaniques, un comportement non endommageable est d'abord observé, ce qui permet de disposer d'un matériau ayant une déformation de type linéaire élastique jusqu'à un certain seuil de sollicitations. Au-delà de ce seuil, on retrouve un comportement avec fissuration progressive des couches en céramique, donc hors du domaine linéaire élastique, mais la capacité de déviation et, éventuellement, de cicatrisation des fissures offerte par les couches relativement souples retarde encore le risque d'exposition directe à l'oxygène du carbone constitutif des fibres ou de leur revêtement.

Les couches en matière céramique relativement rigide faisant partie de la matrice peuvent être en une même matière céramique ou en plusieurs matières céramiques différentes. La ou les matières céramiques peuvent être choisies parmi des carbures, des borures et des siliciures, par exemple parmi le carbure de bore B₁₃C₂ et le carbure de silicium SiC.

De préférence, chaque couche de la matrice est formée par infiltration chimique en phase vapeur en mode pulsé, c'est-à-dire par une succession de cycles conduisant à des dépôts élémentaires. Comme cela est connu en soi, l'infiltration chimique en phase vapeur en mode pulsé permet un contrôle précis de la microstructure des dépôts formés.

Des exemples particuliers de mise en oeuvre de l'invention seront maintenant décrits à titre indicatif. Il sera fait référence aux figures annexées qui montrent :
- figure 1: un cliché obtenu au microscope à balayage électronique montrant une mèche de fibres de carbone densifiée par une matrice séquencée selon un procédé conforme à l'invention ;
- figures 2A et 2B: des courbes de traction à température ambiante montrant la relation jusqu'à rupture entre la déformation mesurée et la contrainte en traction appliquée, respectivement pour des matériaux composites à matrice monolithique de l'art antérieur et des matériaux composites à matrice séquencée selon l'invention ;
- figures 3A et 3B : des courbes illustrant le comportement en traction à chaud respectivement pour des matériaux composites à matrice monolithique de l'art antérieur et des matériaux composites à matrice séquencée selon l'invention ; et
- figure 4: des courbes illustrant le comportement en traction d'un matériau composite à matrice séquencée selon l'invention, après vieillissement en température sous air.

Dans les exemples donnés plus loin de mise en oeuvre d'un procédé selon l'invention, on utilise un renfort fibreux constitué de mèches de fibres de carbone du type "T300" commercialisées par la société japonaise Toray Industries, chaque mèche comprenant environ 3 000 fibres élémentaires.

Les renforts fibreux sont densifiés par une matrice qui est réalisée en répétant les deux séquences successives BC/B₁₃C₂ et BC/SiC, c'est-à-dire une première séquence comprenant :
- formation d'une couche relativement souple de carbone dopé au bore BC, et
- formation d'une couche relativement rigide de carbure de bore rhomboédrique, de type B₁₃C₂,
et une deuxième séquence comprenant :
- formation d'une couche relativement souple de carbone dopé au bore BC, et
- formation d'une couche relativement rigide de carbure de silicium SiC.

Chaque couche de chaque séquence est formée par infiltration chimique en phase vapeur en mode pulsé. A cet effet, le renfort fibreux est placé dans une enceinte où sont établies des conditions de température et de pression prédéterminées. Un volume de la phase gazeuse réactionnelle donnant le dépôt souhaité est admis dans l'enceinte et y séjourne pendant une durée déterminée, avant évacuation des espèces gazeuses de l'enceinte et introduction à nouveau d'un nouveau volume de phase gazeuse. Le cycle comprenant l'introduction de la phase gazeuse dans l'enceinte, le séjour de la phase gazeuse à l'intérieur de l'enceinte et l'évacuation des espèces gazeuses hors de l'enceinte est répété le nombre de fois nécessaire pour atteindre l'épaisseur de dépôt voulue.

Pour la formation d'une couche de carbone dopé au bore, on utilise une phase gazeuse réactive comprenant un mélange de trichlorure de bore BCl₃, de propane C₃H₈ et de gaz hydrogène H₂. Les conditions d'infiltration en mode pulsé sont :
T = 900°C
P = 3 kPa
α (BCl₃) = 16,6
α (C₃H₈) = 3,6
Dₚ = 5 s
K_{D} ≈ 0,3 nm
dans lesquelles :
T est la température dans l'enceinte d'infiltration,
P est la pression totale dans l'enceinte d'infiltration,
α (BCl₃) est le rapport entre débit de H₂ et débit de BCl₃
α (C₃H₈) est le rapport entre débit de H₂ et débit de C₃H₈
Dₚ est le temps de séjour pour chaque cycle, et
K_{D} est l'épaisseur du dépôt élémentaire formé au cours de chaque cycle.

Afin de caractériser le dépôt obtenu dans ces conditions, une couche de relativement forte épaisseur a été formée sur un échantillon de fibres. L'observation par microscopie optique a mis en évidence le caractère anisotrope du dépôt correspondant à une structure de type laminaire lisse conférant un comportement relativement souple et une faculté de déviation de fissures en raison de la capacité de déformation élastique en cisaillement et en direction transversale par rapport à la couche. La composition chimique du dépôt, mesurée à la microsonde X, est de 12 at. % de bore pour 88 at. % de carbone.

Pour la formation d'une couche de carbure de bore, on utilise une phase gazeuse réactive comprenant du trichlorure de bore BCl₃, du gaz hydrogène H₂, et du méthane CH₄ comme espèces réactionnelles. Les conditions d'infiltration en mode pulsé sont:
T = 900°C
P = 5,5 kPa
α (BCl₃) = 3,7
α (CH₄) = 13
Dₚ = 2 s
K_{D} ≈ 0,3 nm

Une caractérisation du dépôt par formation d'une couche relativement épaisse sur un échantillon de fibres montre effectivement une composition proche du carbure rhomboédrique B₁₃C₂, cependant que le spectre de diffraction X révèle un dépôt amorphe.

Pour la formation d'une couche de carbure de silicium, on utilise une phase gazeuse comprenant du méthyltrichlorosilane (MTS) et du gaz hydrogène H₂ comme espèces réactives. Les conditions d'infiltration en mode pulsé sont :
T = 900°C
P = 3 kPa
α (MTS) = 6
Dₚ = 2 s
K_{D} ≈ 1 nm.

L'analyse morphologique du dépôt formé sur un échantillon montre que la surface est lisse. L'analyse à la microsonde X donne 52 at. % de carbone et 48 at. % de silicium. Le spectre de diffraction aux rayons X montre un faible degré de cristallisation.

### Exemple 1

Des mèches de renfort fibreux de 150 mm de long sont densifiées par une matrice constituée par la répétition de la double séquence BC/B₁₃C₂/BC/SiC dans les conditions indiquées ci-dessus. Le taux volumique des fibres dans la mèche initiale est de 24 % (pourcentage du volume apparent de la mèche effectivement occupé par les fibres).

Deux premières doubles séquences sont réalisées dans lesquelles l'épaisseur des couches BC est de 0,1 µm, l'épaisseur de la couche B₁₃C₂ est de 0,4µm et l'épaisseur de la couche SiC est de 0,4µm, donnant une épaisseur totale de 1 µm.

Une troisième double séquence est réalisée dans laquelle l'épaisseur des couches déviatrices BC est de 0,2µm, l'épaisseur de la couche B₁₃C₂ est de 2µm et l'épaisseur de la couche SiC est de 2µm, donnant une épaisseur totale de 4,4 µm.

Enfin, une quatrième double séquence est réalisée dans laquelle l'épaisseur des couches déviatrices BC est de 0,2µm, l'épaisseur de la couche B₁₃C₂ est de 3µm et l'épaisseur de la couche SiC est de 3µm, donnant une épaisseur totale de 6,4 µm.

Dans les matériaux composites ainsi obtenus, l'épaisseur totale des couches relativement souples BC est donc égale à 1,2 µm.

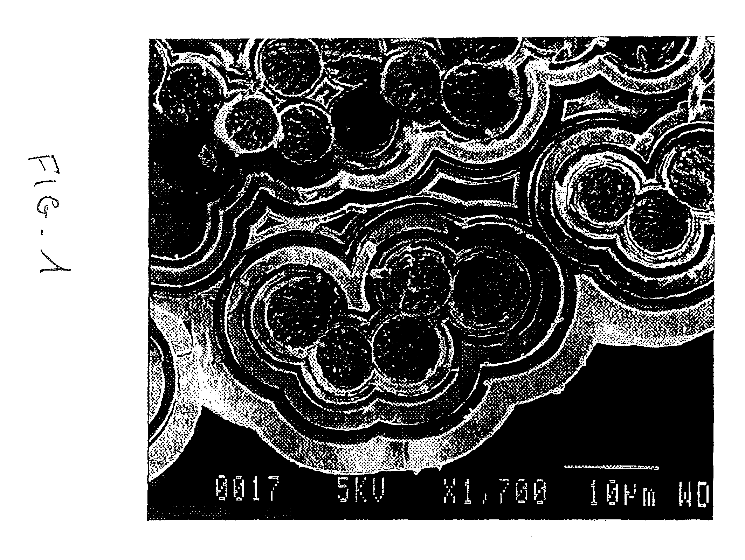

La figure 1 est un cliché au microscope à balayage électronique d'une coupe du matériau densifié par la matrice séquencée. Les fibres de carbone sont revêtues individuellement par les couches formées lors des deux premières séquences, exception faite des zones de contact entre les fibres, ces couches étant disposées concentriquement autour des fibres. Les couches formées lors de la troisième séquence d'infiltration enveloppent des groupes de fibres, tandis que les couches formées lors de la quatrième séquence d'infiltration entourent pratiquement la mèche de fibres. L'observations au microscope révèle que, de façon remarquable, aucune fissuration initiale n'est présente dans la matrice.

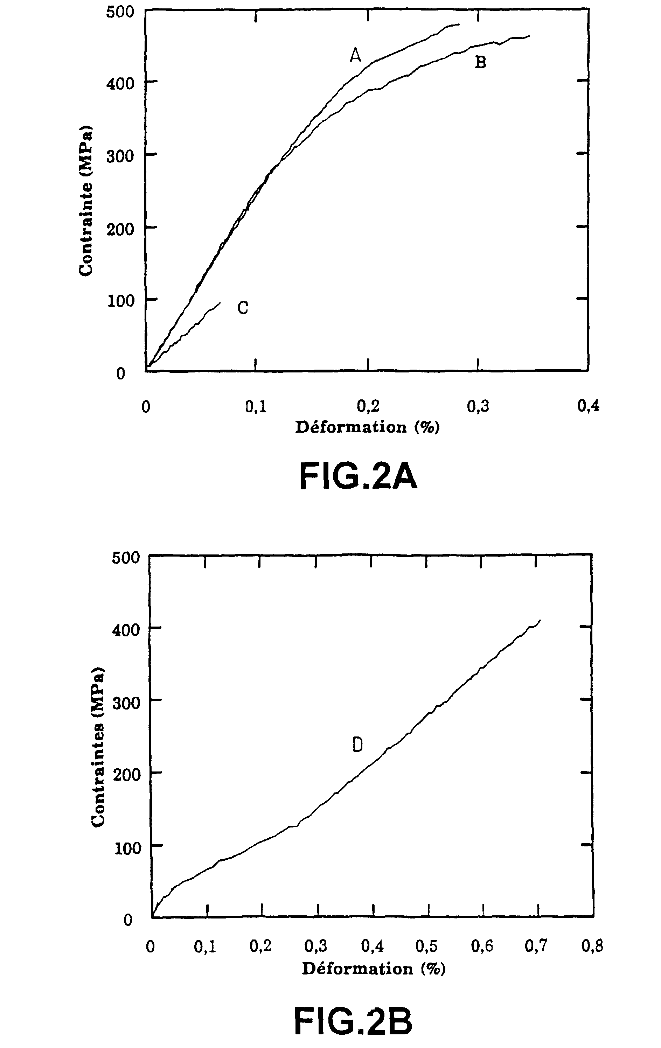

Un premier essai en traction à température ambiante est effectué sur une mèche densifiée par la matrice séquencée. La courbe B de la figure 2A montre l'allongement relatif mesuré (en %) en fonction de l'effort de traction exercé, ce jusqu'à rupture qui intervient environ à 460 MPa.

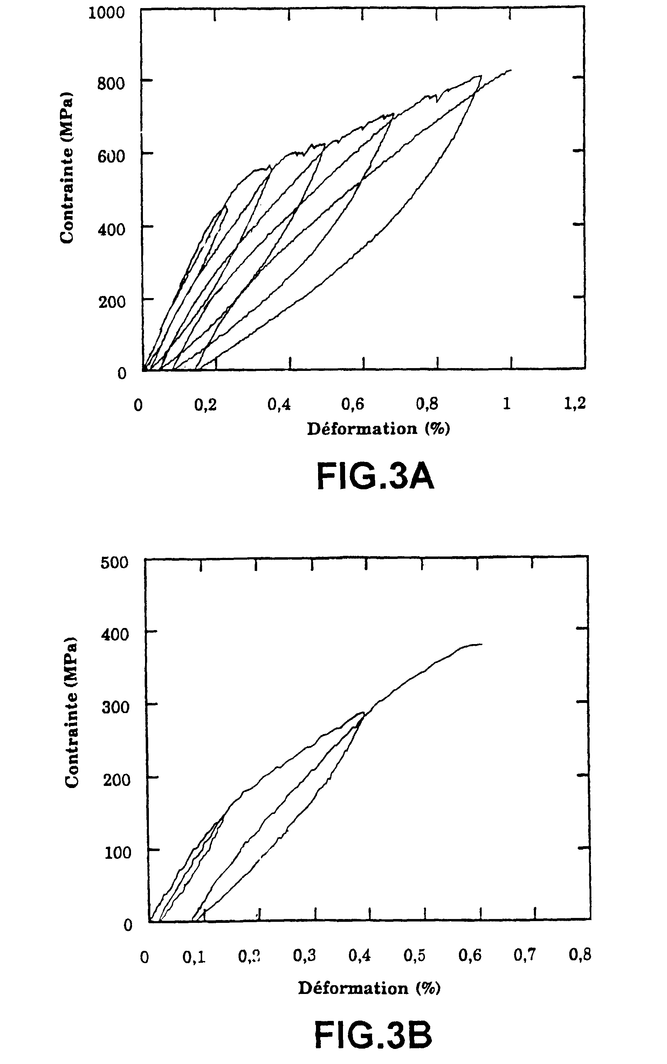

Un deuxième essai en traction est effectué à 700°C sous air après application d'un revêtement externe constitué par un verre de type P₂O₅, afin de réaliser une protection anti-oxydation pendant la durée de l'essai. Les courbes B de la figure 3A montrent les relations entre allongement et contrainte lors de plusieurs cycles d'étirement-relaxation.

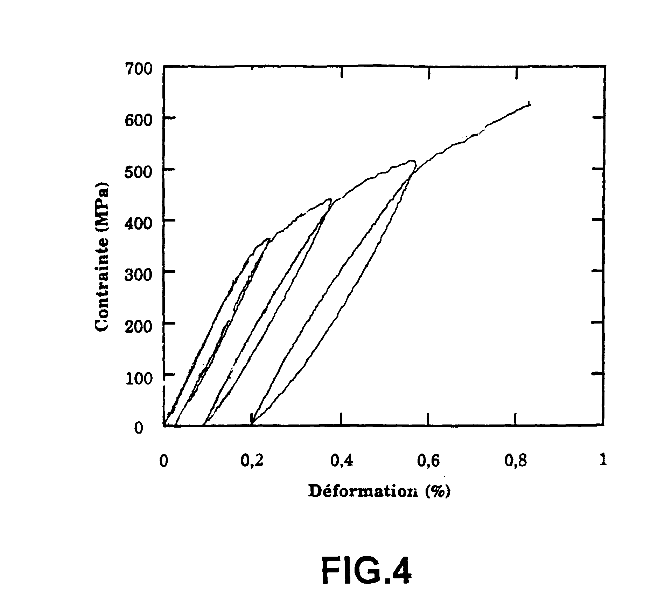

Un troisième essai en traction est effectué après vieillissement à 700°C sous air pendant 70 h sur des mèches densifiées dépourvues de revêtement additionnel P₂O₅. Le comportement mécanique en traction lors de plusieurs cycles d'étirement-relaxation, puis jusqu'à rupture, est illustré par les courbes de la figure 4.

Enfin, des essais de vieillissement sous air à 700°C sont effectués sur deux mèches densifiées par la matrice séquencée, celles-ci étant soumises à des contraintes statiques en traction respectivement de 230 MPa et 350 MPa. Ces essais n'ont pas conduit à la rupture du matériau composite après 70 h sous 230 MPa ou après 191 h sous 350 MPa. L'observation de la surface du matériau composite met en évidence des fissures cicatrisées par une phase attribuée à de l'oxyde de bore. L'observation au microscope optique d'une section longitudinale du matériau après 70 h de vieillissement n'a pas permis de mettre en évidence des fissures à l'intérieur de la mèche. Ceci signifie que les fissures observées en surface n'ont pas atteint la surface des fibres. A ce niveau de sollicitation, les fibres de carbone sont donc totalement protégées de l'environnement oxydant.

### Exemple 2

Des mèches de fibres de carbone sont densifiées par une matrice séquencée de la même façon que dans l'exemple 1, à l'exception de l'épaisseur des couches relativement souples BC qui est divisée par deux, donnant une épaisseur totale de 0,6µm. L'observation au microscope du matériau composite ainsi élaboré ne révèle aucun réseau de fissuration initial au sein de la matrice.

La courbe A de la figure 2A montre la relation entre l'allongement relatif et l'effort exercé lors d'un essai en traction effectué à température ambiante jusqu'à rupture d'une mèche ainsi densifiée par une matrice séquencée.

### Exemple 3

Des mèches de fibres de carbone sont densifiées par une matrice séquencée de la même façon que dans l'exemple 1, à l'exception de l'épaisseur des couches relativement souples BC qui est multipliée par deux, donnant une épaisseur totale de 2,4µm. L'observation au microscope du matériau composite ainsi élaboré ne révèle aucun réseau de fissuration initial au sein de la matrice.

La courbe C de la figure 2A montre la relation entre l'allongement relatif et l'effort exercé lors d'un essai en traction effectué à température ambiante jusqu'à rupture d'une mèche ainsi densifiée par une matrice séquencée.

### Exemple comparatif 1

A titre de comparaison, des mèches de fibres telles que celles utilisées dans l'exemple 1 sont densifiées par une matrice monolithique de carbure de silicium, après formation sur les fibres d'un revêtement d'interphase en carbone pyrolytique de type laminaire rugueux.

L'interphase en carbone pyrolytique est formée par infiltration chimique en phase vapeur en mode pulsé, à partir de méthane C₃H₈ en tant que précurseur gazeux. Les conditions d'infiltration sont :
T = 950°C
P = 3 kPa
Dₚ = 5 s
K_{D} ≈ 0,5 nm.

Le nombre de cycles est choisi de manière à atteindre une épaisseur de 2,4 µm pour le revêtement d'interphase.

La matrice en carbure de silicium est formée par infiltration chimique en mode pulsé, à partir d'une phase gazeuse contenant du méthyltrichlorosilane (MTS) et de l'hydrogène H₂ comme espèces réactives. Les conditions d'infiltration sont :
T = 950°C
P = 3 kPa
α (MTS) = 6
Dₚ Kₚ ≈ 1,5 nm. = 2 s

Un premier essai en traction à température ambiante est effectué sur une mèche densifiée par la matrice SiC. La courbe D de la figure 2B montre l'allongement relatif mesuré en fonction de l'effort de traction exercé, ce jusqu'à rupture qui intervient à environ 405 MPa.

Un deuxième essai en traction est effectué à 700°C sous air après application d'un revêtement externe constitué par un verre de type P₂O₅ afin de réaliser une protection anti-oxydation pendant la durée de l'essai. Les courbes D de la figure 3B montrent la relation entre allongement et contrainte lors de plusieurs cycles d'étirement-relaxation.

Enfin, deux essais de vieillissement sous air à 700°C sont effectués sur deux mèches densifiées par la matrice SiC et dépourvues de revêtement additionnel P₂O_{5,} celles-ci étant soumises à des contraintes statiques en traction respectivement de 125 MPa et 250 MPa. La rupture est observée au bout de 5 h à 125 MPa et au bout de 1 h à 250 MPa. On observe donc une durée de vie bien inférieure à celle du matériau composite à matrice séquencée de l'exemple 1, en dépit de la présence de fissures en surface de celui-ci. La différence de durée de vie vient de ce que, dans le matériau à matrice SiC non séquencée, le réseau de fissuration initial, aggravé par la sollicitation mécanique, offre rapidement un trajet direct vers les fibres pour l'oxygène ambiant.

### Interprétation des résultats illustrés par les figures 2A, 2B, 3A, 3B et 4 et des exemples

La figure 2B montre que le matériau composite à matrice SiC non séquencée présente un comportement non linéaire dès le début de la sollicitation mécanique, qui est associé aux mécanismes d'endommagement de la matrice et de l'interphase initiés dès le début du processus d'élaboration du matériau. Par contre, la figure 2A montre que les matériaux composites à matrice séquencée avec couches déviatrices de fissures BC présentent un comportement initial linéaire. La contrainte correspondant au début de la non-linéarité est d'autant plus élevée que l'épaisseur totale des couches BC est faible, cependant la rupture est moins fragile pour une épaisseur totale de 1,2 µm. Il semble que l'optimum d'épaisseur totale pour les couches BC se situe entre 0,6 micron et 2,4 microns, c'est-à-dire un pourcentage, pour l'épaisseur totale des couches relativement souples, compris entre environ 4 % et environ 20 % de l'épaisseur totale des séquences déposées.

La figure 3B montre qu'à chaud, avec protection externe anti-oxydation, la phase d'endommagement s'étend jusqu'à un niveau de contrainte plus élevé qu'à froid pour le matériau composite à matrice SiC non séquencée. Par contre, le comportement à chaud des matériaux composites à matrice séquencée est peu différent du comportement à froid : il est linéaire au début, puis endommageable. Cependant, la phase d'endommagement est beaucoup plus étendue. Les niveaux de contrainte et allongement à rupture atteints sont assez élevés : environ 800 MPa et 1 %. On note que la contrainte à rupture est très proche de celle de la mèche de fibres non densifiée.

Enfin, la figure 4 montre, après vieillissement sous air, un comportement en traction du même type que celui observé à température ambiante ou à chaud pour le matériau composite à matrice séquencée. La déformation à rupture apparaît toutefois plus importante que lors de l'essai en traction à température ambiante sans vieillissement.

Une propriété remarquable du matériau composite élaboré conformément à l'invention réside dans l'absence de réseau de fissuration initiale résultant du processus de fabrication.

Bien que cela ne saurait constituer en aucun cas une explication scientifique certaine de ce phénomène, la demanderesse estime que des caractéristiques particulières du séquençage de matrice réalisé concourent à l'obtention de ce résultat.

En premier, il est probable que le gainage individuel ou essentiellement individuel de chaque fibre du renfort fibreux par au moins une séquence de matrice comprenant une couche relativement souple et une couche relativement rigide contribue à permettre d'absorber les dilatations différentielles sans induire de fissuration des couches rigides. L'épaisseur de la première ou des premières séquences déposées doit donc être relativement faible et tenir compte du taux volumique de fibres dans le renfort fibreux, c'est-à-dire de la fraction du volume apparent du renfort effectivement occupée par les fibres. D'une façon générale, cette épaisseur est choisie de préférence inférieure à 1 micron. Bien qu'aucune limite inférieure ne soit imposée dans l'absolu, sinon une ou quelques couches atomiques, en pratique, afin de ne pas multiplier inutilement le nombre de séquences, une valeur minimale d'environ 0,2 micron, ou de préférence environ 0,45 micron, peut par exemple être adoptée. On notera en outre que le revêtement individuel de fibres revient à former des éléments de renfort de diamètre accru. Il est donc possible d'utiliser des fibres de départ ayant un diamètre inférieur à celui qui pourrait être requis pour atteindre un taux volumique de fibres souhaité et des caractéristiques mécaniques souhaitées du renfort.

L'épaisseur des séquences de matrice formées après celle(s) gainant les fibres est croissante de façon continuelle ou par paliers, les séquences enrobant successivement des groupes de fibres puis des torons de fibres. En effet, cet accroissement d'épaisseur, qui peut être plus marqué pour les couches rigides que pour les couches souples, n'affecte pas la capacité globale de la matrice d'absorber les dilatations différentielles entre les constituants du matériau composite et évite une multiplication inutile du nombre de séquences, multiplication qui se traduirait par une augmentation importante du temps et du coût d'élaboration du matériau. L'accroissement progressif d'épaisseur réalisé de façon plus marquée pour les couches céramiques relativement rigides permet aussi de conserver à la matrice son caractère essentiellement céramique. C'est ainsi que l'épaisseur des séquences formées successivement peut croître d'une valeur comprise entre environ 0,2 micron et 1 micron à une valeur supérieure à 2 microns, tandis que, dans les séquences successives, le pourcentage S représenté par l'épaisseur de la couche relativement souple par rapport à l'épaisseur totale de la séquence peut décroître d'une valeur comprise entre environ 10 % et environ 35 % jusqu'à une valeur comprise entre environ 3 % et environ 20%.

Les exemples qui précèdent montrent qu'un carbone dopé au bore, BC, convient pour la réalisation des couches relativement souples, du fait de son caractère anisotrope et de sa capacité de déformation élastique en cisaillement et transversalement. Le carbone dopé au bore BC a en outre l'avantage de présenter une meilleure tenue à l'oxydation. Toutefois, d'autres matières, n'ayant pas nécessairement la propriété d'autocicatrisation, peuvent convenir, par exemple le carbone pyrolytique, notamment de type laminaire rugueux, et le nitrure de bore BN.

Quant aux couches relativement rigides, elles sont constituées par une matière céramique susceptible d'être déposée par infiltration chimique en phase vapeur, par exemple un carbure, un borure, un siliciure, ou toute autre céramique susceptible de permettre une cicatrisation des fissures lorsqu'elles apparaissent.

Pour les couches relativement souples des différentes séquences de matrice, on pourra utiliser toujours la même matière, comme dans les exemples 1 à 3, ou choisir différentes matières, en alternant ou non dans les séquences successives.

De même, pour les couches relativement rigides, on pourra utiliser toujours la même matière, ou choisir différentes matières, comme dans les exemples 1 à 3, en alternant ou non dans les séquences successives.

## Revendications

1. Procédé pour l'élaboration d'un matériau composite thermostructural comprenant un renfort fibreux en fibres de carbone ou revêtues de carbone et ayant une résistance accrue à l'oxydation, procédé selon lequel une matrice est formée par infiltration chimique en phase vapeur au sein du renfort fibreux au moins partiellement de façon séquencée en alternant la formation d'une couche en une matière relativement souple capable de dévier d'éventuelles fissures qui l'atteignent et d'une couche en une matière céramique relativement rigide, caractérisé en ce que:
- chaque séquence élémentaire de matrice comprenant une couche relativement souple et une couche céramique relativement rigide est formée avec une épaisseur qui varie de façon croissante à partir des fibres du renfort, au fur et à mesure de l'élaboration de la matrice, l'épaisseur totale d'au moins la séquence élémentaire de matrice déposée en premier sur les fibres étant choisie suffisamment faible pour gainer les fibres de façon essentiellement individuelle, et
- les couches relativement souples sont réalisées en une ou plusieurs matières anisotropes présentant une capacité suffisante de déformation élastique en cisaillement et transversale, et l'épaisseur des couches relativement souples élémentaires est choisie suffisamment grande, tout en conservant un caractère principalement céramique à la matrice, pour pouvoir absorber les dilatations différentielles des constituants du matériau composite au stade de l'élaboration de celui-ci sans induire l'existence d'un réseau de fissuration initiale.

2. Procédé selon la revendication 1, caractérisé en ce que les couches relativement souples sont formées de manière à représenter une épaisseur totale comprise entre environ 4 % et environ et 20 % de l'épaisseur totale des couches de la matrice séquencée.

3. Procédé selon l'une quelconque des revendications 1 et 2, caractérisé en ce que, dans les séquences élémentaires, le pourcentage S représenté par l'épaisseur de la couche relativement souple par rapport à l'épaisseur totale de la séquence décroît entre une valeur maximale Smax dans la séquence élémentaire formée en premier sur les fibres et une valeur minimale Smin dans la séquence élémentaire de matrice formée en dernier.

4. Procédé selon la revendication 3, caractérisé en ce que Smax est compris entre environ 10 % et environ 35 %.

5. Procédé selon l'une quelconque des revendications 3 et 4, caractérisé en ce que Smin est compris entre environ 3 % et environ 20 %.

6. Procédé selon l'une quelconque des revendications 1 à 5, caractérisé en ce que l'épaisseur d'au moins la séquence élémentaire formée en premier sur les fibres est comprise entre 0,2 et 1 micron.

7. Procédé selon l'une quelconque des revendications 1 à 5, caractérisé en ce que l'épaisseur d'au moins la séquence élémentaire de matrice formée en dernier est au moins égale à 2 microns.

8. Procédé selon l'une quelconque des revendications 1 à 7, caractérisé en ce que les couches relativement souples sont réalisées en au moins une matière choisie parmi le carbone pyrolytique, le nitrure de bore BN et le carbone dopé au bore BC.

9. Procédé selon l'une quelconque des revendications 1 à 8, caractérisé en ce que les couches relativement souples sont réalisées en au moins une matière apte à former un composé autocicatrisant sous l'effet de l'oxydation.

10. Procédé selon l'une quelconque des revendications 1 à 9, caractérisé en ce que les couches céramiques relativement rigides sont réalisées en au moins une matière choisie parmi les carbures, les siliciures et les borures.

11. Procédé selon la revendication 10, caractérisé en ce qu'au moins une partie des couches relativement rigides sont réalisées en un carbure de bore ou en carbure de silicium.

12. Procédé selon l'une quelconque des revendications 1 à 11, caractérisé en ce que chaque couche constitutive de la matrice séquencée est formée par infiltration chimique en phase vapeur en mode pulsé.

13. Matériau composite thermostructural comprenant un renfort fibreux en fibres de carbone ou revêtues de carbone et une matrice au moins partiellement séquencée avec alternance de couches en matière relativement souples capables de dévier d'éventuelles fissures qui les atteignent et de couches en matière céramique relativement rigides, caractérisé en ce que :
- chaque séquence élémentaire de matrice comprenant une couche céramique relativement rigide a une épaisseur qui varie de façon croissante depuis la séquence élémentaire la plus proche des fibres jusqu'à la séquence élémentaire la plus éloignée des fibres, au moins la séquence élémentaire de matrice la plus proche des fibres gainant celles-ci de façon essentiellement individuelle, et
- l'épaisseur des couches relativement souples, ainsi que le caractère anisotrope et la capacité de déformation élastique en cisaillement et transversale de la matière ou des matières qui les constituent sont telles que la matrice du matériau composite est exempte de fissuration au moins à la fin du processus d'élaboration du matériau composite.

14. Matériau selon la revendication 13, caractérisé en ce que le pourcentage de l'épaisseur totale des couches relativement souples par rapport à l'épaisseur totale des couches de la matière séquencée est compris entre environ 4 % et environ 20 %.

15. Matériau selon l'une quelconque des revendications 13 et 14, caractérisé en ce que dans les séquences élémentaires, le pourcentage S représenté par l'épaisseur de la couche relativement souple par rapport à l'épaisseur totale de la séquence décroît entre une valeur maximale Smax dans la séquence élémentaire formée en premier sur les fibres et une valeur minimale Smin dans la séquence élémentaire de matrice formée en dernier.

16. Matériau selon la revendication 15, caractérisé en ce que Smax est compris entre environ 10 % et environ 35 %.

17. Matériau selon l'une quelconque des revendications 15 et 16, caractérisé en ce que Smin est compris entre environ 3 % et environ 20 %.

18. Matériau selon l'une quelconque des revendications 13 à 16, caractérisé en ce que l'épaisseur d'au moins la séquence élémentaire de matrice la plus proche des fibres est comprise entre 0,2 et 1 micron.

19. Matériau selon l'une quelconque des revendications 13 à 18, caractérisé en ce que l'épaisseur d'au moins la séquence élémentaire de matrice la plus éloignée des fibres est au moins égale à 2 microns.

20. Matériau selon l'une quelconque des revendications 13 à 19, caractérisé en ce que les couches relativement souples sont réalisées en au moins une matière choisie parmi le carbone pyrolytique, le nitrure de bore BN et le carbone dopé au bore BC.

21. Matériau selon l'une quelconque des revendications 13 à 20, caractérisé en ce que les couches relativement souples sont réalisées en au moins une matière apte à former un composé autocicatrisant sous l'effet de l'oxydation.

22. Matériau selon l'une quelconque des revendications 13 à 21, caractérisé en ce que les couches céramiques relativement rigides sont réalisées en au moins une matière choisie parmi les carbures, les siliciures et les borures.

23. Matériau selon l'une quelconque des revendications 13 à 22, caractérisé en ce qu'au moins une partie des couches relativement rigides sont réalisées en un carbure de bore ou en carbure de silicium.

## Patentansprüche

1. Verfahren zur Herstellung eines bei erhöhter Temperatur tragfähigen Verbundmaterials, das eine faserige Verstärkung aus Kohlenstoffasern oder aus mit Kohlenstoff beschichteten Fasern aufweist und eine erhöhte Oxidationsbeständigkeit besitzt, wobei bei dem Verfahren durch chemische Infiltration in der Dampfphase im Inneren der faserigen Verstärkung eine Matrix zumindest teilweise in sequentieller Weise ausgebildet wird durch Abwechseln der Bildung einer Schicht aus einem relativ geschmeidigen Material, die in der Lage ist, mögliche Risse, die sie erreichen, abzuleiten, und einer Schicht aus einem relativ starren Keramikmaterial, dadurch gekennzeichnet, daß:
- jede eine relativ geschmeidige Schicht und eine relativ starre keramische Schicht aufweisende Elementarsequenz der Matrix mit einer Dicke ausgebildet wird, die sich ausgehend von den Fasern der Verstärkung nach Maßgabe der Herstellung der Matrix in anwachsender Weise verändert, wobei die Gesamtdicke wenigstens der zuerst auf den Fasern abgeschiedenen Elementarsequenz der Matrix ausreichend gering gewählt wird, um die Fasern im wesentlichen einzeln zu umhüllen, und
- die relativ geschmeidigen Schichten aus einem oder mehreren anisotropen Materialien, die eine ausreichende elastische Scherverformbarkeit und Querverformbarkeit zeigen, hergestellt werden, und die Dicke der relativ geschmeidigen Elementarschichten ausreichend groß gewählt wird, um die unterschiedlichen Ausdehnungen der Bestandteile des Verbundmaterials im Stadium seiner Herstellung aufnehmen zu können, ohne zum Vorliegen eines Netzes von Anfangsrissigkeit zu führen, wobei der Matrix ein hauptsächlich keramischer Charakter erhalten bleibt.

2. Verfahren nach Anspruch 1, dadurch gekennzeichnet, daß die relativ geschmeidigen Schichten dergestalt gebildet werden, daß sie eine Gesamtdicke zwischen etwa 4% und etwa 20% der Gesamtdicke der Schichten der sequentiellen Matrix darstellen.

3. Verfahren nach Anspruch 1 oder 2, dadurch gekennzeichnet, daß in den Elementarsequenzen der Prozentsatz S, dargestellt durch die Dicke der relativ geschmeidigen Schicht im Vergleich zur Gesamtdicke der Sequenz, von einem maximalen Wert Smax in der zuerst auf den Fasern ausgebildeten Elementarsequenz auf einen minimalen Wert Smin in der zuletzt ausgebildeten Elementarsequenz der Matrix abnimmt.

4. Verfahren nach Anspruch 3, dadurch gekennzeichnet, daß Smax zwischen etwa 10% und etwa 35% liegt.

5. Verfahren nach Anspruch 3 oder 4, dadurch gekennzeichnet, daß Smin zwischen etwa 3% und etwa 20% liegt.

6. Verfahren nach einem der Ansprüche 1 bis 5, dadurch gekennzeichnet, daß die Dicke mindestens der zuerst auf den Fasern ausgebildeten Elementarsequenz zwischen 0,2 und 1 µm liegt.

7. Verfahren nach einem der Ansprüche 1 bis 5, dadurch gekennzeichnet, daß die Dicke mindestens der zuletzt ausgebildeten Elementarsequenz der Matrix mindestens gleich 2 µm beträgt.

8. Verfahren nach einem der Ansprüche 1 bis 7, dadurch gekennzeichnet, daß die relativ geschmeidigen Schichten aus mindestens einem Material hergestellt werden, das ausgewählt wird unter Pyrokohlenstoff, Bornitrid BN und mit Bor dotiertem Kohlenstoff BC.

9. Verfahren nach einem der Ansprüche 1 bis 8, dadurch gekennzeichnet, daß die relativ geschmeidigen Schichten aus mindestens einem Material hergestellt werden, das in der Lage ist, unter der Wirkung der Oxidation eine selbstheilende Verbindung zu bilden.

10. Verfahren nach einem der Ansprüche 1 bis 9, dadurch gekennzeichnet, daß die relativ starren keramischen Schichten aus mindestens einem Material hergestellt werden, das ausgewählt wird unter den Carbiden, den Siliciden und den Boriden.

11. Verfahren nach Anspruch 10, dadurch gekennzeichnet, daß mindestens ein Teil der relativ starren Schichten aus einem Borcarbid oder einem Siliciumcarbid hergestellt wird.

12. Verfahren nach einem der Ansprüche 1 bis 11, dadurch gekennzeichnet, daß jede die sequentielle Matrix aufbauende Schicht durch impulsweise chemische Infiltration in der Dampfphase ausgebildet wird.

13. Bei erhöhter Temperatur tragfähiges Verbundmaterial, das eine faserige Verstärkung aus Kohlenstoffasern oder aus mit Kohlenstoff beschichteten Fasern und eine zumindest teilweise sequentielle Matrix mit einer Wechselfolge von Schichten aus relativ geschmeidigem Material, die in der Lage sind, mögliche Risse, die sie erreichen, abzuleiten, und von relativ starren Schichten aus keramischem Material, aufweist, dadurch gekennzeichnet, daß:
- jede eine relativ starre keramische Schicht aufweisende Elementarsequenz der Matrix eine Dicke hat, die sich von der Elementarsequenz, die den Fasern am nächsten ist, zu der Elementarsequenz, die von den Fasern am weitesten entfernt ist, in anwachsender Weise verändert, wobei mindestens die Elementarsequenz der Matrix, die den Fasern am nächsten ist, diese im wesentlichen einzeln umhüllt, und
- die Dicke der relativ geschmeidigen Schichten sowie der anisotrope Charakter und die elastische Scherverformbarkeit und Querverformbarkeit des sie aufbauenden Materials oder der sie aufbauenden Materialien dergestalt sind, daß die Matrix des Verbundmaterials zumindest am Ende des Herstellungsverfahrens des Verbundmaterials frei von Rissigkeit ist.

14. Material nach Anspruch 13, dadurch gekennzeichnet, daß der Prozentsatz der Gesamtdicke der relativ geschmeidigen Schichten im Vergleich zur Gesamtdicke der Schichten des sequentiellen Materials zwischen etwa 4% und etwa 20% liegt.

15. Material nach Anspruch 13 oder 14, dadurch gekennzeichnet, daß in den Elementarsequenzen der Prozentsatz S, dargestellt durch die Dicke der relativ geschmeidigen Schicht im Vergleich zur Gesamtdicke der Sequenz, von einem maximalen Wert Smax in der zuerst auf den Fasern ausgebildeten Elementarsequenz auf einen minimalen Wert Smin in der zuletzt ausgebildeten Elementarsequenz der Matrix abnimmt.

16. Material nach Anspruch 15, dadurch gekennzeichnet, daß Smax zwischen etwa 10% und etwa 35% liegt.

17. Material nach Anspruch 15 oder 16, dadurch gekennzeichnet, daß Smin zwischen etwa 3% und etwa 20% liegt.

18. Material nach einem der Ansprüche 13 bis 16, dadurch gekennzeichnet, daß die Dicke mindestens der Elementarsequenz der Matrix, die den Fasern am nächsten ist, zwischen 0,2 und 1 µm liegt.

19. Material nach einem der Anprüche 13 bis 18, dadurch gekennzeichnet, daß die Dicke mindestens der Elementarsequenz der Matrix, die von den Fasern am weitesten entfernt ist, mindestens gleich 2 µm beträgt.

20. Material nach einem der Ansprüche 13 bis 19, dadurch gekennzeichnet, daß die relativ geschmeidigen Schichten aus mindestens einem Material hergestellt sind, das ausgewählt ist unter Pyrokohlenstoff, Bornitrid BN und mit Bor dotiertem Kohlenstoff BC.

21. Material nach einem der Ansprüche 13 bis 20, dadurch gekennzeichnet, daß die relativ geschmeidigen Schichten aus mindestens einem Material hergestellt sind, das in der Lage ist, unter der Wirkung der Oxidation eine selbstheilende Verbindung zu bilden.

22. Material nach einem der Ansprüche 13 bis 21, dadurch gekennzeichnet, daß die relativ starren keramischen Schichten aus mindestens einem Material hergestellt sind, das ausgewählt ist unter den Carbiden, den Siliciden und den Boriden.

23. Material nach einem der Ansprüche 13 bis 22, dadurch gekennzeichnet, daß mindestens ein Teil der relativ starren Schichten aus einem Borcarbid oder aus einem Siliciumcarbid hergestellt ist.

## Claims

1. A method of making a thermostructural composite material comprising carbon or carbon-coated fiber reinforcement and having increased ability to withstand oxidation, in which method a matrix is formed by chemical vapor infiltration within the fiber reinforcement at least in part in a sequenced manner, alternating formation of a layer of a relatively flexible material capable of deflecting any cracks reaching it, and a layer of a relatively rigid ceramic material, the method being characterized in that:
· each elementary sequence of the matrix comprising a relatively flexible layer and a relatively rigid ceramic layer is formed with a thickness that increases starting from the reinforcing fibers as preparation of the matrix progresses, with the total thickness of at least the elementary matrix sequence deposited first on the fibers being selected to be sufficiently small to cover the fibers in essentially individual manner; and
· the relatively flexible layers are made of one or more anisotropic materials having sufficient capacity for elastic deformation in shear and transversely, and, while conserving a mainly ceramic character for the matrix, the thickness of the relatively flexible elementary layers is selected to be large enough for them to be capable of absorbing differential expansion of the components of the composite material while it is being made, without inducing therein the existence of an initial network of cracks.

2. A method according to claim 1, characterized in that the relatively flexible layers are made so as to constitute a total thickness that lies in the range about 4% to about 20% of the total thickness of the layers of the sequenced matrix.

3. A method according to claim 1 or 2, characterized in that, in the elementary sequences, the percentage S represented by the thickness of the relatively flexible layer relative to the total thickness of the sequence decreases from a maximum value Smax in the elementary sequence formed first on the fibers, to a minimum value Smin in the elementary sequence of the matrix that is formed last.

4. A method according to claim 3, characterized in that Smax lies in the range about 10% to about 35%.

5. A method according to claim 3 or 4, characterized in that Smin lies in the range about 3% to about 20%.

6. A method according to any one of claims 1 to 5, characterized in that the thickness of at least the elementary sequence that is formed first on the fibers lies in the range about 0.2 microns to 1 micron.

7. A method according to any one of claims 1 to 5, characterized in that the thickness of at least the elementary sequence of the matrix formed last is at least 2 microns.

8. A method according to any one of claims 1 to 7, characterized in that the relatively flexible layers are made of at least one material selected from pyrolytic carbon, boron nitride BN, and boron-doped carbon BC.

9. A method according to any one of claims 1 to 8, characterized in that the relatively flexible layers are made in at least one material suitable for forming a self-healing compound under the effect of oxidation.

10. A method according to any one of claims 1 to 9, characterized in that the relatively rigid ceramic layers are made out of at least one material selected from carbides, silicides, and borides.

11. A method according to claim 10, characterized in that at least some of the relatively rigid layers are made of a boron carbide or silicon carbide.

12. A method according to any one of claims 1 to 11, characterized in that each layer constituting the sequenced matrix is formed by pulsed mode chemical vapor infiltration.

13. A thermostructural composite material having carbon or carbon-coated fiber reinforcement and a matrix that is at least partially sequenced with altemating layers of relatively flexible material capable of deflecting any cracks that reach them, and layers of relatively rigid ceramic material, the composite material being characterized in that:
· each elementary sequence of the matrix comprises a relatively rigid ceramic layer having a thickness that increases going from the elementary sequence closest to the fibers to the elementary sequence furthest from the fibers, with at least the elementary sequence of the matrix closest to the fibers coating them in substantially individual manner; and
· the thicknesses of the relatively flexible layers, and the anisotropic character and the capacity for elastic deformation in shear and transversely of the material(s) constituting said layers are such that the matrix of the composite material is free from cracking, at least at the end of the process of building up the composite material.

14. A material according to claim 13, characterized in that the percentage of the total thickness of the relatively flexible layers compared with the total thickness of the layers of sequenced material lies in the range about 4% to about 20%.

15. A material according to claim 13 or 14, characterized in that in the elementary sequences, the percentage S represented by the thickness of the relatively flexible layer relative to the total thickness of the sequence decreases from a maximum value Smax in the elementary sequence formed first on the fibers, to a minimum value Smin in the elementary sequence of the matrix that is formed last.

16. A material according to claim 15, characterized in that Smax lies in the range about 10% to about 35%.

17. A material according to claim 15 or 16, characterized in that Smin lies in the range about 3% to about 20%.

18. A material according to any one of claims 13 to 16, characterized in that the thickness of at least the elementary sequence of the matrix that is closest to the fibers lies in the range 0.2 microns to 1 micron.

19. A material according to any one of claims 13 to 18, characterized in that the thickness of at least the elementary sequence of the matrix that is furthest from the fibers is not less than 2 microns.

20. A material according to any one of claims 13 to 19, characterized in that the relatively flexible layers are made out of at least one material selected from pyrolytic carbon, boron nitride BN, and boron-doped carbon BC.

21. A material according to any one of claims 13 to 20, characterized in that the relatively flexible layers are made out of at least one material suitable for forming a compound that is self-healing under the effect of oxidation.

22. A material according to any one of claims 13 to 21, characterized in that the relatively rigid ceramic layers are made out of at least one material selected from carbides, silicides, and borides.

23. A material according to any one of claims 13 to 22, characterized in that at least some of the relatively rigid layers are made of a boron carbide or silicon carbide.
